# FASCICULE DE BREVET EUROPEEN

(11) **EP 3 444 049 B1**
(45) Date de publication et mention de la délivrance du brevet: **05.02.2020**
(21) Numéro de dépôt: 18178869.6
(22) Date de dépôt: 20.06.2018
(51) Int. Cl.: B22F 3/00, B22F 3/11, C04B 35/638, B22F 7/00, B22F 7/02, B22F 7/06, B28B 1/00, B33Y 10/00, B33Y 30/00, B29C 64/165, B29C 64/171, B29C 64/188, B29C 64/194, B22F 3/24, B22F 3/105, B22F 1/00, C04B 35/626, C04B 35/634, B23K 26/361

(54) **PROCÉDÉ ET MACHINE DE FABRICATION DE PIÈCES EN MATÉRIAU CÉRAMIQUE OU MÉTALLIQUE PAR LA TECHNIQUE DES PROCÉDÉS ADDITIFS**
VERFAHREN UND MASCHINE ZUR HERSTELLUNG VON ROHLINGEN AUS KERAMIK- UND/ODER METALLWERKSTOFF MITHILFE DER TECHNIK DER ADDITIVEN FERTIGUNG
METHOD AND MACHINE FOR PRODUCING PARTS MADE OF CERAMIC OR METALLIC MATERIAL BY ADDITIVE MANUFACTURING

(30) Priorité: 18.08.2017 FR 1770870
(43) Date de publication de la demande: 20.02.2019
(73) Titulaire: S.A.S 3DCeram-Sinto, 87280 Limoges (FR)
(72) Inventeur: GAIGNON, Richard, 91770 Saint-Vrain (FR); CHAPUT, Christophe, 87410 Le Palais sur Vienne (FR); NGUYEN, Marc, 87110 LE VIGEN (FR)
(74) Mandataire: Cabinet Chaillot

(56) Documents cités:
- EP-A1- 3 045 148
- US-A1- 2004 145 629
- US-A1- 2012 308 837
- US-A1- 2013 193 619
- US-A1- 2015 314 530
- US-A1- 2017 232 516

## Description

La présente invention concerne un procédé et une machine de fabrication de pièces crues en au moins un matériau choisi parmi les matériaux céramiques et les matériaux métalliques par la technique des procédés additifs, de telles pièces crues étant ensuite soumises à des opérations de déliantage et de frittage pour obtenir des pièces finies.

La technique des procédés additifs, également appelée stéréolithographie, comprend généralement les étapes suivantes, pour l'obtention des pièces crues en céramique :
- on construit, par conception assistée par ordinateur, un modèle informatique de la pièce à fabriquer, modèle dont les dimensions sont légèrement plus grandes que celles de la pièce à fabriquer afin de prévoir un retrait de la céramique au cours de la fabrication de la pièce ; et
- on fabrique la pièce par la technique des procédés additifs, technique selon laquelle :
   - on forme, sur un support rigide, une première couche d'une composition photodurcissable comprenant généralement au moins une matière céramique, au moins un monomère et/ou oligomère photodurcissable, au moins un photoinitiateur et le cas échéant au moins un plastifiant et/ou au moins un solvant et/ou au moins un dispersant ;
   - on fait durcir la première couche de la composition photodurcissable par irradiation (par balayage laser de la surface libre de ladite couche ou par système de projection à diodes) selon un motif défini à partir du modèle pour ladite couche, formant un premier étage ;
   - on forme, sur le premier étage, une seconde couche de la composition photodurcissable ;
   - on fait durcir la seconde couche de la composition photodurcissable, par irradiation selon un motif défini pour ladite couche, formant un deuxième étage, cette irradiation s'effectuant comme pour la première couche ;
   - optionnellement, on répète les étapes ci-dessus pour obtenir la pièce à l'état cru.

Ensuite, pour obtenir la pièce finie, on nettoie la pièce à l'état cru pour enlever la composition non durcie ; on déliante la pièce à l'état cru nettoyée ; et on fritte la pièce à l'état cru nettoyée et déliantée pour obtenir la pièce finie.

On procède de la même façon dans le cas d'un matériau métallique.

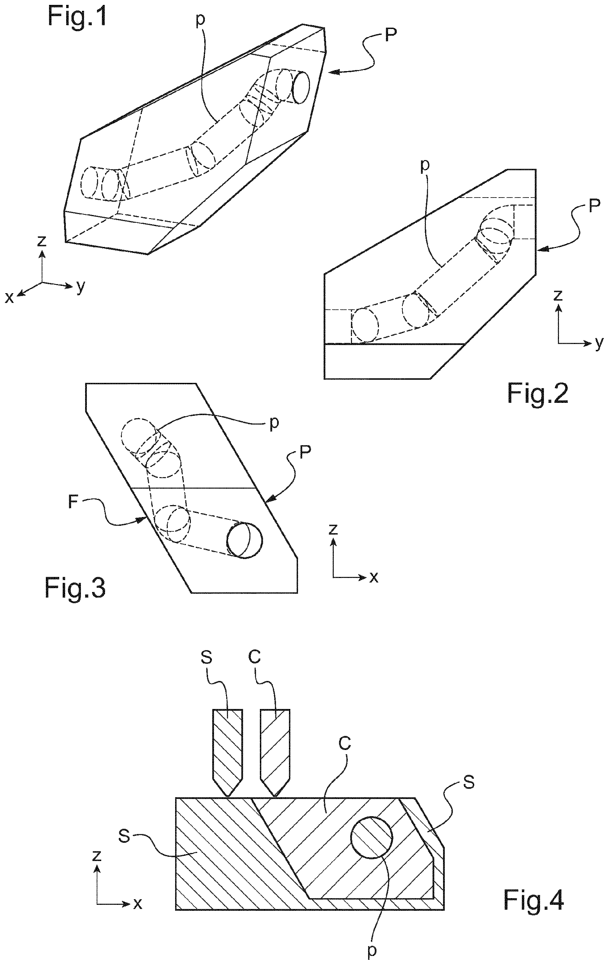

La fabrication de pièces crues en matériau céramique ou en matériau métallique ayant des formes particulières peut présenter des difficultés.
(1) Actuellement, les pièces une fois construites se trouvent au sein d'un bloc de pâte non durcie, ce qui impose de rechercher la pièce solide qui se trouve dans de la pâte collante, puis de laver la pièce par exemple en l'aspergeant d'un produit chimique pour retirer cette pâte collante.
(2) Les pièces à construire peuvent comporter au moins une région en porte-à-faux qui nécessite d'être supportée pendant sa construction. On peut se reporter aux Figures 1 à 3 du dessin annexé qui montrent une pièce P à fabriquer pour laquelle, quelle que soit son orientation, il y aura toujours une face F qui aura besoin d'être supportée pendant la construction, sinon la pièce s'effondrera.
(3) Les pièces à construire peuvent comporter des passages p de géométrie tridimensionnelle, comme c'est le cas de la pièce P des Figures 1 à 3. Ce passage ne pourra pas être nettoyé correctement car il n'existe pas d'outils s'adaptant à cette géométrie.

La Société déposante a recherché une solution à ces problèmes et découvert que la construction de la pièce à l'intérieur d'une enveloppe ou coque en un matériau sacrificiel - lequel est constitué uniquement de la partie organique d'une composition photodurcissable céramique ou métallique - permet :
- d'obtenir, après irradiation de chaque couche, un bloc de matériau sacrificiel durci renfermant la pièce recherchée, bloc qu'il suffira de mettre à délianter pour obtenir la pièce ; le nettoyage de la pièce se trouve donc optimisé car il n'est plus besoin de chercher la pièce au sein de la pâte et de nettoyer la pièce avec un produit chimique ;
- dans le cas des pièces présentant des faces en porte-à-faux et donc susceptibles de s'effondrer au cours de leur construction, de prévoir que l'enveloppe ou coque de matériau sacrificiel durci assure favorablement le support recherché ;
- dans le cas de pièces comportant des parties creuses ou passages débouchant à leur surface et difficiles, voire impossibles à nettoyer correctement, de pouvoir libérer ces espaces qui se trouvent alors remplis de matériau sacrificiel, d'être libérés lors du déliantage pour obtenir les parties creuses ou passages voulus sans avoir besoin d'y faire entrer un outil ou un produit chimique de nettoyage.

Par ailleurs, l'invention offre l'avantage complémentaire que la quantité de matière à utiliser pour la coque ou enveloppe peut être optimisée en prévoyant la juste quantité nécessaire, sans excédent.

La présente invention porte donc d'abord sur un procédé de fabrication d'au moins une pièce en au moins un matériau choisi parmi les matériaux céramiques et les matériaux métalliques par la technique des procédés additifs, ladite ou lesdites pièces étant formées à l'état cru, puis soumises à des opérations de déliantage puis de frittage, procédé suivant lequel :
(1) on construit, par conception assistée par ordinateur, un modèle informatique de la pièce à fabriquer ou des pièces à fabriquer simultanément ;
(2) on forme, sur une plate-forme de construction, ladite ou lesdites pièces à fabriquer, celles-ci étant à base d'une composition photodurcissable céramique ou métallique (CPC ou CPM) formée :
   - d'une partie minérale consistant en au moins une matière céramique pulvérulente ou en au moins une matière métallique pulvérulente ; et
   - d'une partie organique apte à être détruite par chauffage lors du déliantage et comportant au moins un monomère et/ou oligomère photodurcissable et au moins un photoinitiateur,
   caractérisé par le fait que :
   - on choisit une CPC ou CPM ayant la consistance d'une suspension apte à s'écouler pour former une couche ;
   - on prépare une matière organique sacrificielle (MOS) apte à former une couche photodurcissable et à être détruite par chauffage lors du déliantage, ladite MOS comportant au moins un monomère et/ou oligomère photodurcissable et au moins un photoiniateur ;
   - pour la construction de ladite ou desdites pièces, sur la plate-forme de construction, on forme des couches successives de MOS empilées l'une sur l'autre , chaque couche de MOS étant amenée à durcir par irradiation avant l'application de la couche suivante, la ou les pièces proprement dites à base de CPC ou CPM étant construites par :
      - formation par usinage d'au moins un évidement dans au moins une couche de MOS durcie à partir de la surface supérieure de celle-ci ;
      - dépôt dans ledit ou lesdits évidements de CPC ou CPM pour le ou les remplir ;
      - durcissement par irradiation de la CPC ou CPM placée dans ledit ou lesdits évidements pour obtenir une surface horizontale dure de même niveau que la couche de MOS durcie avoisinante, à chaque formation d'évidement(s), celui-ci ou ceux-ci étant délimités selon le ou les motifs préalablement définis à partir du modèle informatique, et sa ou ses profondeurs, choisies pour assurer la continuité de la pièce ou des pièces à fabriquer,
   et l'on obtient, une fois l'empilement des couches durcies réalisé, une ou des pièces crues enserrées dans de la MOS, pièces crues que l'on soumet à un déliantage par chauffage pour détruire la MOS dans laquelle elle(s) se trouve(nt) prisonnière(s) afin de la ou de les libérer et de la ou de les soumettre ensuite à un frittage.

Les matériaux céramiques sont les matériaux céramiques frittables pulvérulents choisis notamment parmi l'alumine (Al₂O₃), la zircone (Zr₂), l'alumine renforcée par zircone, la zircone renforcée par alumine, le zircon (ZrSiO₄), la silice (SiO₂), l'hydroxyapatite, la zircon silice (ZrSiO₄ + SiO₂), le nitrure de silicium, le phosphate tricalcique (TCP), le nitrure d'aluminium, le carbure de silicium, la cordiérite et la mullite.

Les matériaux métalliques sont les matériaux métalliques frittables pulvérulents choisis parmi les métaux purs, tels que Al, Cu, Mg, Si, Ti, Zn, Sn, Ni ..., leurs alliages et les mélanges de métaux purs et de leurs alliages.

Les évidements peuvent avoir à être formés dans toute l'épaisseur d'une couche durcie de MOS ou sur une hauteur inférieure à la hauteur d'une couche. Ils peuvent aussi pouvoir être formés sur une hauteur supérieure à l'épaisseur d'une couche, par exemple sur une hauteur égale à la hauteur de plusieurs couches étalées au préalable.

Lorsque la ou les pièces à construire comportent des parties creuses, celles-ci doivent déboucher à la surface extérieure de la pièce pour que la MOS puisse s'évacuer lors du déliantage.

Le procédé selon l'invention peut s'appliquer à la fabrication de plusieurs pièces identiques, lesquelles seront prisonnières d'un même bloc de MOS.

On peut utiliser une MOS de consistance pâteuse que l'on étale en couche par raclage ou une MOS en suspension que l'on applique par immersion de la plate-forme dans un bain de ladite suspension pour former à chaque fois la couche de MOS à durcir, et raclage de la couche ainsi formée.

Dans le cas où la ou les pièces à construire comportent au moins une région latérale qui nécessite d'être supportée pendant la construction, on a avantageusement construit au préalable, par conception assistée par ordinateur, un modèle informatique de la forme de la MOS à l'état durci, cette forme étant telle que la ou les pièces construites soient supportées pendant sa ou leur construction.

Pour la formation du ou des évidements, on peut conduire un usinage mécanique. On peut également conduire un usinage laser, notamment dans des conditions de réglage de la puissance du laser entre 1 et 3 watts et de vitesse de déplacement du laser entre 1 et 100 millimètres par seconde.

Egalement, à chaque étape d'usinage, on peut souffler et on peut aspirer les débris notamment en même temps que l'on conduit ledit usinage.

On peut appliquer la CPC ou CPM dans le ou les évidements par une buse de distribution.

On peut conduire le durcissement par irradiation laser de chaque couche de MOS et le durcissement par irradiation laser des couches de CPC ou CPM placées dans les évidements dans les conditions d'un réglage de la puissance du laser entre 70 et 700 milliwatts et une vitesse de déplacement du laser entre 1000 et 6000 millimètres par seconde.

On peut conduire le déliantage à une température de 50 à 800°C, notamment de 100 à 700°C.

La présente invention a également pour objet une machine de fabrication d'au moins une pièce en au moins un matériau choisi parmi les matériaux céramiques et les matériaux métalliques par le procédé utilisant la technique des procédés additifs tel que défini ci-desus, caractérisée par le fait qu'elle comporte :
- un bâti encadrant une plate-forme de construction comportant une surface de travail;
- des moyens d'irradiation en regard du plateau de travail ;
- des moyens d'amenée et d'étalement en couches sur la plate-forme de construction d'une matière organique photodurcissable sacrificielle (MOS);
- des moyens d'usinage aptes à former au moins un évidement dans une couche de MOS photodurcie à partir de la partie supérieure de celle-ci ;
- des moyens de soufflage et d'aspiration des débris résultant dudit usinage ;
- des moyens de remplissage du ou des évidements formés dans chaque couche de MOS photodurcie pour compléter la couche ainsi évidée par une composition photodurcissable céramique ou métallique (CPC ou CPM) apte à s'écouler ;
- des moyens d'irradiation situés au-dessus de la plate-forme de construction et aptes à irradier, pour la faire durcir, chaque couche de MOS une fois étalée et à irradier, pour la faire durcir, la CPC ou la CPM une fois placée dans les évidements pratiqués dans des couches successives de MOS durcie.

Une telle machine, apte à appliquer en couches une MOS sous la forme d'une pâte, peut comporter un portique muni d'au moins une lame de raclage et apte à se déplacer sur le bâti au-dessus de la surface de travail de telle sorte que le bord libre de la ou des lames de raclage est apte à étaler les couches de pâte de MOS sur la surface de travail,
ou la MOS étant amenée par au moins une buse de distribution déplaçable devant au moins une lame de raclage qui étale la MOS en une couche uniforme lors de son passage sur celle-ci.

Une telle machine, apte à appliquer en couches une MOS sous la forme d'une suspension, peut comporter un bac à remplir par ladite suspension, dans lequel la plate-forme de suspension est apte à descendre pas à pas pour former sur celle-ci à chaque pas une couche à irradier, ainsi qu'un racleur (« recoater ») pour s'assurer que la suspension est distribuée sur toute la surface à irradier.

Les moyens d'amenée d'au moins une CPC ou CPM sur la surface de travail peuvent être constitués par au moins une buse de distribution déplaçable au-dessus d'un évidement correspondant pour appliquer la composition correspondante dans celui-ci.

Conformément à un premier mode de réalisation, la ou au moins l'une des buses peut être alimentée en MOS ou CPC ou CPM par un tuyau flexible relié à un réservoir, en particulier un réservoir d'alimentation à piston.

Conformément à un deuxième mode de réalisation, la ou au moins l'une des buses peut être alimentée en MOS ou CPC ou CPM par une cartouche dont elle forme la partie supérieure, qui contient une réserve de MOS ou CPC ou CPM et qui est rechargeable à partir d'un réservoir d'alimentation monté ou non sur la machine ou qui est remplaçable lorsqu'elle est vide par une cartouche pleine, ce remplacement pouvant être assuré par un bras robotisé.

La ou au moins l'une des buses peut être montée déplaçable
- à l'aide d'un bras robotisé ; ou
- sur un portique qui comporte à la fois une glissière permettant de la déplacer selon l'axe horizontal x de la plate-forme de construction et une glissière permettant de la déplacer selon l'axe horizontal y de la plate-forme de construction; ou
- sur un portique muni d'au moins une lame de raclage pour permettre son déplacement selon l'axe horizontal x d'avance de la lame de raclage, ledit portique comportant également une glissière permettant de la déplacer selon l'axe horizontal y.

Pour mieux illustrer l'objet de la présente invention, on va en décrire ci-après, à titre indicatif et non limitatif, un mode de réalisation particulier avec référence au dessin annexé.

Sur ce dessin :
- la Figure 1 est une vue schématique en perspective d'une pièce à construire comportant un passage cylindrique en trois dimensions ;
- les Figures 2 et 3 sont des vues schématiques de la pièce de la Figure 1 dans les plans respectivement yz et xz :
- la Figure 4 est une vue schématique en coupe transversale de la pièce en cours de construction selon l'invention ;
- la Figure 5 montre des vues schématiques de la pièce construite selon l'invention avant déliantage, dans les plans zy et zx ;
- les Figures 6 et 7 sont des vues schématiques en perspective de la pièce de la Figure 5 respectivement avant et après déliantage ;
- les Figures 8 à 11 illustrent les étapes successives de la construction d'une couche de matière photodurcissable sacrificielle ;
- les Figures 12 et 13 illustrent la formation d'une couche formée à la fois d'une matière organique sacrificielle et d'une matière céramique photodurcissable.

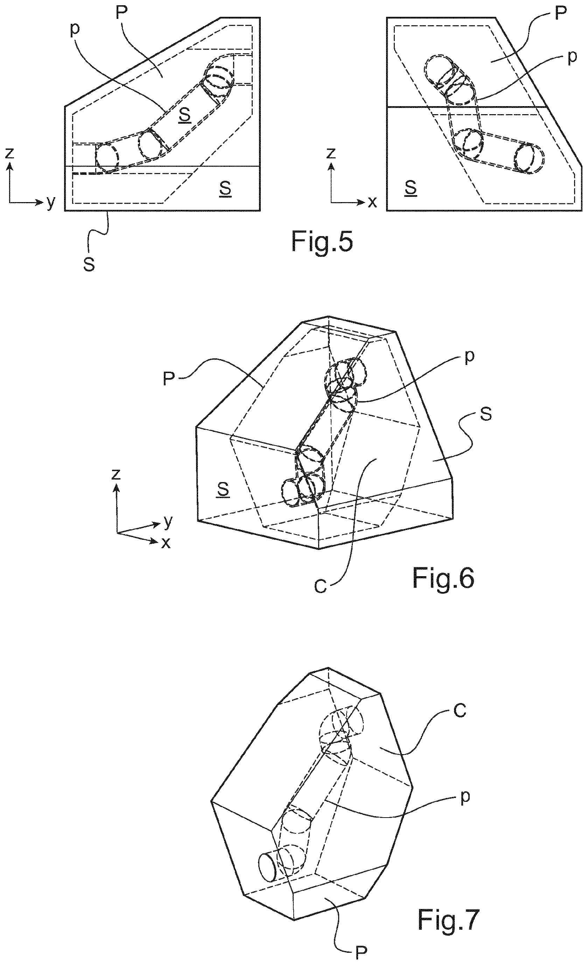

Si l'on se réfère aux Figures 4 à 6, on peut voir que l'on a illustré la formation d'une pièce P selon l'invention au sein d'une enveloppe ou coque S en matière organique sacrificielle durcie, le passage p étant également rempli de matière organique sacrificielle S.

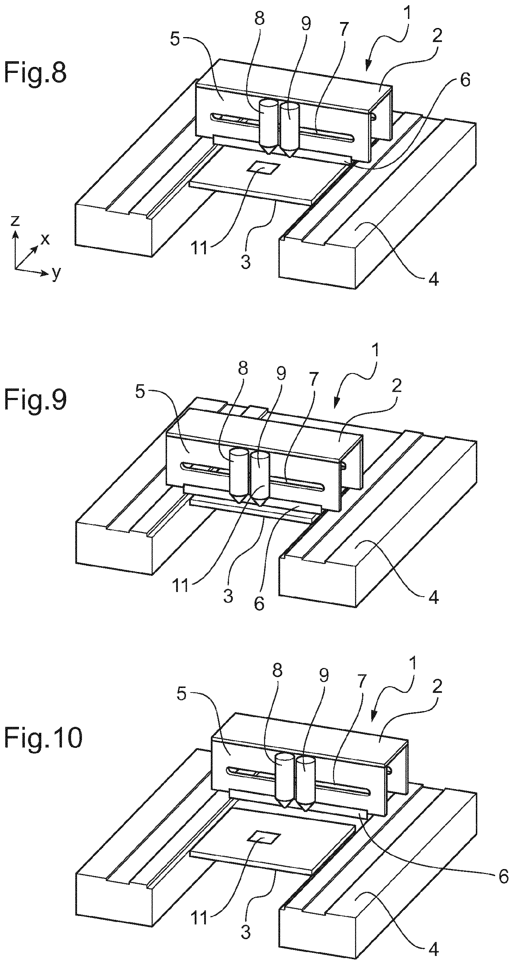

Si l'on se réfère à la Figure 8, on peut voir que l'on a représenté schématiquement une machine 1 pour la fabrication de pièces crues, laquelle comporte un dispositif 2 de raclage d'une couche de pâte sur une surface de travail d'une plate-forme de construction horizontale 3.

Le dispositif de raclage 2, monté coulissant sur le bâti 4 de la machine, comporte un portique 5 portant à l'avant une lame de raclage 6 ayant un bord de raclage horizontal et qui se déplace vers l'avant si l'on regarde la Figure 8, soit selon l'axe horizontal x.

La paroi verticale avant du portique 5 présente une glissière horizontale 7 le long de laquelle peuvent se déplacer, selon l'axe horizontal y, perpendiculaire à l'axe x, deux buses 8, 9 l'une (8) pour le dépôt d'une matière organique sacrificielle photodurcissable et l'autre (9) pour le dépôt d'une composition photodurcissable céramique.

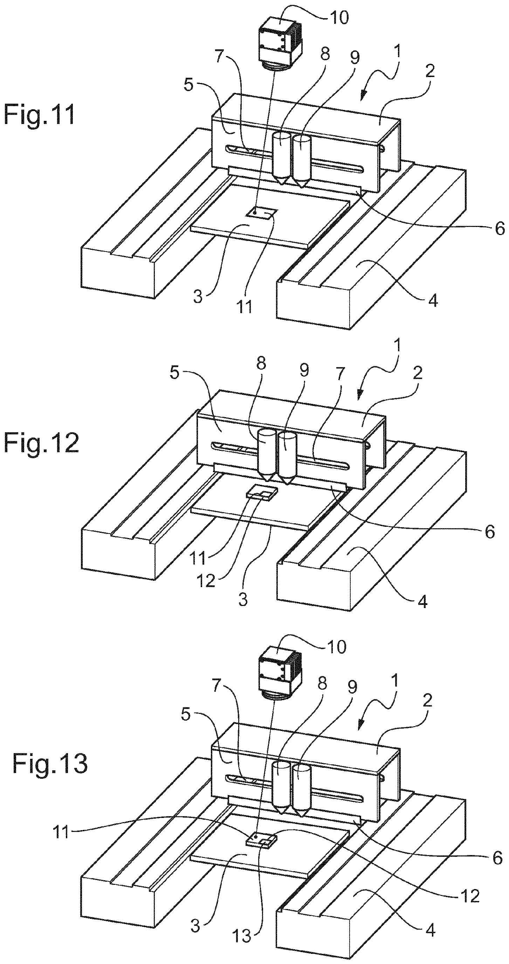

Sur la Figure 11, on a également fait figurer la tête galvanométrique 10 qui oriente le faisceau laser.

### Figure 8

On dépose sur la surface de travail de la plate-forme de construction 3 une couche de matière organique sacrificielle 11 par déplacement du dispositif de raclage 2 selon l'axe x et de la buse 8 selon l'axe y.

### Figure 9

En avançant, le dispositif de raclage 2 a mis à niveau par déplacement de la lame 6 la couche de matière organique sacrificielle 11.

### Figure 10

Le dispositif de raclage 2 a été ramené à sa position initiale et relevé.

### Figure 11

On amène la couche 11 ainsi déposée à polymériser par application du faisceau laser, la tête galvanométrique 10 étant en service.

### Figure 12

On conduit un usinage laser de la couche 11 qui vient d'être durcie pour former dans celle-ci un évidement 12, cette opération d'usinage laser s'effectuant avec soufflage et aspiration des débris en même temps que le lasage.

### Figure 13

A l'aide de la deuxième buse 9, on a déposé dans l'évidement une composition céramique photodurcissable 13 que l'on polymérise par application du faisceau laser (tête galvanométrique 10 en service).

On vient de décrire la formation d'une couche durcie de matière organique sacrificielle et de matière céramique, les deux étant photodurcies.

La pièce recherchée est construite couche après couche de matière organique sacrificielle photodurcie, les évidements destinés à être remplis de matière céramique photodurcissable étant creusés dans au moins une couche de matière organique sacrificielle préalablement durcie, les profondeurs des évidements et leurs emplacements sur les couches de matière organique sacrificielle étant choisis pour assurer la formation de la pièce céramique recherchée.

## Revendications

1. Procédé de fabrication d'au moins une pièce en au moins un matériau choisi parmi les matériaux céramiques et les matériaux métalliques par la technique des procédés additifs, ladite ou lesdites pièces étant formées à l'état cru, puis soumises à des opérations de déliantage puis de frittage, procédé suivant lequel :
(1) on construit, par conception assistée par ordinateur, un modèle informatique de la pièce à fabriquer ou des pièces à fabriquer simultanément ;
(2) on forme, sur une plate-forme de construction, ladite ou lesdites pièces à fabriquer, celles-ci étant à base d'une composition photodurcissable céramique ou métallique (CPC ou CPM) formée :
- d'une partie minérale consistant en au moins une matière céramique pulvérulente ou en au moins une matière métallique pulvérulente ; et
- d'une partie organique apte à être détruite par chauffage lors du déliantage et comportant au moins un monomère et/ou oligomère photodurcissable et au moins un photoinitiateur,
**caractérisé par le fait que** :
- on choisit une CPC ou CPM ayant la consistance d'une suspension apte à s'écouler pour former une couche ;
- on prépare une matière organique sacrificielle (MOS) apte à former une couche photodurcissable et à être détruite par chauffage lors du déliantage, ladite MOS comportant au moins un monomère et/ou oligomère photodurcissable et au moins un photoiniateur ;
- pour la construction de ladite ou desdites pièces, sur la plate-forme de construction, on forme des couches successives de MOS empilées l'une sur l'autre , chaque couche de MOS étant amenée à durcir par irradiation avant l'application de la couche suivante, la ou les pièces proprement dites à base de CPC ou CPM étant construites par :
- formation par usinage d'au moins un évidement dans au moins une couche de MOS durcie à partir de la surface supérieure de celle-ci ;
- dépôt dans ledit ou lesdits évidements de CPC ou CPM pour le ou les remplir ;
- durcissement par irradiation de la CPC ou CPM placée dans ledit ou lesdits évidements pour obtenir une surface horizontale dure de même niveau que la couche de MOS durcie avoisinante,
à chaque formation d'évidement(s), celui-ci ou ceux-ci étant délimités selon le ou les motifs préalablement définis à partir du modèle informatique, et sa ou ses profondeurs, choisies pour assurer la continuité de la pièce ou des pièces à fabriquer,
et l'on obtient, une fois l'empilement des couches durcies réalisé, une ou des pièces crues enserrées dans de la MOS, pièces crues que l'on soumet à un déliantage par chauffage pour détruire la MOS dans laquelle elle(s) se trouve(nt) prisonnière(s) afin de la ou de les libérer et de la ou de les soumettre ensuite à un frittage.

2. Procédé selon la revendication 1, **caractérisé par le fait que** l'on utilise une MOS de consistance pâteuse que l'on étale en couche par raclage ou une MOS en suspension que l'on applique par immersion de la plate-forme dans un bain de ladite suspension pour former à chaque fois la couche de MOS à durcir, et raclage de la couche ainsi formée.

3. Procédé selon l'une des revendications 1 et 2, dans lequel la ou les pièces à construire comportent au moins une région latérale qui nécessite d'être supportée pendant la construction, **caractérisé par le fait que** l'on a construit au préalable, par conception assistée par ordinateur, un modèle informatique de la forme de la MOS à l'état durci, cette forme étant telle que la ou les pièces construites soient supportées pendant sa ou leur construction.

4. Procédé selon l'une des revendications 1 à 3, **caractérisé par le fait que**, pour la formation du ou des évidements, on conduit un usinage mécanique.

5. Procédé selon l'une des revendications 1 à 3, **caractérisé par le fait que**, pour la formation du ou des évidements, on conduit un usinage laser, notamment dans des conditions de réglage de la puissance du laser entre 1 et 3 watts et de vitesse de déplacement du laser entre 1 et 100 millimètres par seconde.

6. Procédé selon l'une des revendications 1 à 5, **caractérisé par le fait qu'**à chaque étape d'usinage, on souffle et on aspire les débris notamment en même temps que l'on conduit ledit usinage.

7. Procédé selon l'une des revendications 1 à 6, **caractérisé par le fait que** l'on applique la CPC ou CPM dans le ou les évidements par une buse de distribution.

8. Procédé selon l'une des revendications 1 à 7, **caractérisé par le fait que** l'on conduit le durcissement par irradiation laser de chaque couche de MOS et le durcissement par irradiation laser des couches de CPC ou CPM placées dans les évidements dans les conditions d'un réglage de la puissance du laser entre 70 et 700 milliwatts et une vitesse de déplacement du laser entre 1000 et 6000 millimètres par seconde.

9. Procédé selon l'une des revendications 1 à 8, **caractérisé par le fait que** l'on conduit le déliantage à une température de 50 à 800°C, notamment de 100 à 700°C.

10. Machine de fabrication d'au moins une pièce en au moins un matériau choisi parmi les matériaux céramiques et les matériaux métalliques par le procédé utilisant la technique des procédés additifs tel que défini à l'une des revendications 1 à 9, **caractérisée par le fait qu'**elle comporte :
- un bâti (4) encadrant une plate-forme de construction (3) comportant une surface de travail ;
- des moyens d'irradiation en regard du plateau de travail ;
- des moyens d'amenée et d'étalement sur la plate-forme de construction (3) d'une matière organique photodurcissable sacrificielle (MOS);
- des moyens d'usinage aptes à former au moins un évidement (12) dans une couche de MOS photodurcie (11) à partir de la partie supérieure de celle-ci ;
- des moyens de soufflage et d'aspiration des débris résultant dudit usinage ;
- des moyens de remplissage du ou des évidements (12) formés dans chaque couche de MOS photodurcie (11) pour compléter la couche ainsi évidée par une composition photodurcissable céramique ou métallique (CPC ou CPM) apte à s'écouler ;
- des moyens d'irradiation (10) situés au-dessus de la plate-forme de construction (3) et aptes à irradier, pour la faire durcir, chaque couche de MOS une fois étalée et à irradier, pour la faire durcir, la CPC ou la CPM une fois placée dans les évidements (12) pratiqués dans des couches successives de MOS durcie (11) .

11. Machine selon la revendication 10, apte à appliquer en couches une MOS sous la forme d'une pâte, **caractérisée par le fait qu'**elle comporte un portique (5) muni d'au moins une lame de raclage (6) et apte à se déplacer sur le bâti (4) au-dessus de la surface de travail de telle sorte que le bord libre de la ou des lames de raclage (6) est apte à étaler les couches de pâte de MOS sur la surface de travail,
ou la MOS étant amenée par au moins une buse de distribution (8) déplaçable devant au moins une lame de raclage (6) qui étale la MOS en une couche uniforme lors de son passage sur celle-ci.

12. Machine la revendication 10, apte à appliquer en couches une MOS sous la forme d'une suspension, **caractérisée par le fait qu'**elle comporte un bac à remplir par ladite suspension, dans lequel la plate-forme de suspension est apte à descendre pas à pas pour former sur celle-ci à chaque pas une couche à irradier, ainsi qu'un racleur pour s'assurer que la suspension est distribuée sur toute la surface à irradier.

13. Machine selon l'une des revendications 10 à 12, **caractérisée par le fait que** les moyens d'amenée d'au moins une CPC ou CPM sur la surface de travail sont constitués par au moins une buse de distribution (9) déplaçable au-dessus d'un évidement (12) correspondant pour appliquer la composition correspondante dans celui-ci.

14. Machine selon l'une des revendications 11 ou 13, **caractérisée par le fait que** la ou au moins l'une des buses est alimentée en MOS ou CPC ou CPM par un tuyau flexible relié à un réservoir, en particulier un réservoir d'alimentation à piston.

15. Machine selon l'une des revendications 11 ou 13, **caractérisée par le fait que** la ou au moins l'une des buses (8, 9) est alimentée en MOS ou CPC ou CPM par une cartouche dont elle forme la partie supérieure, qui contient une réserve de MOS ou CPC ou CPM et qui est rechargeable à partir d'un réservoir d'alimentation monté ou non sur la machine ou qui est remplaçable lorsqu'elle est vide par une cartouche pleine, ce remplacement pouvant être assuré par un bras robotisé.

16. Machine selon l'une des revendications 11 ou 13, **caractérisée par le fait que** la ou au moins l'une des buses est montée déplaçable
- à l'aide d'un bras robotisé ; ou
- sur un portique qui comporte à la fois une glissière permettant de la déplacer selon l'axe horizontal x de la plate-forme de construction et une glissière permettant de la déplacer selon l'axe horizontal y de la plate-forme de construction; ou
- sur un portique (5) muni d'au moins une lame de raclage (6) pour permettre son déplacement selon l'axe horizontal x d'avance de la lame de raclage, ledit portique (5) comportant également une glissière (7) permettant de la déplacer selon l'axe horizontal y.

## Patentansprüche

1. Verfahren zur Herstellung mindestens eines Rohlings aus mindestens einem Werkstoff, ausgewählt aus den Keramikwerkstoffen und den Metallwerkstoffen mit Hilfe der Technik der additiven Fertigung, wobei der oder die Rohlinge in rohem Zustand gebildet werden, dann Vorgängen der Entbinderns und dann des Sinterns unterzogen werden, einem Verfahren, gemäß dem:
(1) durch computergestütztes Design ein Computermodell des herzustellenden Rohlings oder der gleichzeitig herzustellenden Rohlinge konstruiert wird;
(2) auf einer Konstruktionsplattform der oder die herzustellende(n) Rohlinge gebildet werden, wobei dieselben auf der Grundlage einer photohärtbaren Keramik- oder Metallzusammensetzung (CPC oder CPM) gebildet sind:
- aus einem mineralischen Teil, der aus mindestens einem pulverförmigen Keramikwerkstoff oder aus mindestens einem pulverförmigen Metallwerkstoff besteht; und
- aus einem organischen Teil, der ausgelegt ist, um bei der Entbinderung durch Erhitzen zerstört zu werden und mindestens ein photohärtbares Monomer und/oder Oligomer und mindestens einen Photoinitiator umfasst,
**dadurch gekennzeichnet, dass**:
- eine CPC oder CPM gewählt wird, die die Konsistenz einer Suspension aufweist, die ausgelegt ist, um abzufließen, um eine Schicht zu bilden;
- ein organischer Opferwerkstoff (MOS) hergestellt wird, der ausgelegt ist, um eine photohärtbare Schicht zu bilden und um bei der Entbinderung durch Erhitzen zerstört zu werden, wobei der MOS mindestens ein photohärtbares Monomer und/oder Oligomer und mindestens einen Photointiator umfasst;
- für die Konstruktion des oder der Rohlinge auf der Konstruktionsplattform aufeinanderfolgende Schichten von MOS gebildet werden, die aufeinander gestapelt sind, wobei jede Schicht von MOS zugeführt wird, um durch Bestrahlung vor der Anwendung der folgenden Schicht auszuhärten, wobei der/die eigentliche(n) Rohling(e) auf der Grundlage von CPC oder CPM konstruiert werden durch:
- Bilden durch Bearbeitung mindestens einer Aussparung in mindestens einer ausgehärteten Schicht von MOS ausgehend von der oberen Fläche derselben;
- Ablagern in der oder den Aussparungen von CPC oder CPM, um sie zu füllen;
- Härten durch Bestrahlung der CPC oder CPM, die in die Aussparung oder die Aussparungen platziert ist, um eine harte horizontale Fläche auf der gleichen Ebene wie die benachbarte gehärtete Schicht von MOS an jeder Bildung von Aussparung(en) zu erhalten, wobei diese gemäß dem oder den oben im Voraus definierten Mustern ausgehend vom Computermodell und ihrer/ihren Tiefe(n) begrenzt ist/sind, ausgewählt, um die Kontinuität des herzustellenden Rohlings oder der herzustellenden Rohlinge sicherzustellen,
und, nachdem die Stapelung der gehärteten Schichten durchgeführt wurde, ein oder mehrere unbearbeitete Rohlinge, die in die MOS eingeschlossen sind, erhalten werden, unbearbeitete Rohlinge, die einer Entbinderung durch Erhitzen unterzogen werden, um den MOS zu zerstören, in dem er/sie eingeschlossen ist/sind, um ihn/sie zu freizusetzen und ihn/sie dann einer Sinterung zu unterziehen.

2. Verfahren nach Anspruch 1, **dadurch gekennzeichnet, dass** ein MOS mit pastöser Konsistenz verwendet wird, der durch Schaben zu einer Schicht ausgebreitet wird, oder einen MOS in Suspension, der durch Immersion der Plattform in ein Bad der Suspension angewendet wird, um jedes Mal die zu härtende Schicht von MOS zu bilden, und Schaben der so gebildeten Schicht.

3. Verfahren nach einem der Ansprüche 1 und 2, wobei der oder die zu konstruierenden Rohling(e) mindestens einen lateralen Bereich umfassen, der während der Konstruktion getragen werden muss, **dadurch gekennzeichnet, dass** im Voraus durch computergestütztes Design ein Computermodell der Form des MOS im gehärteten Zustand konstruiert wird, wobei diese Form derart ist, dass der oder die konstruierten Rohling(e) während seiner oder ihrer Konstruktion getragen werden.

4. Verfahren nach einem der Ansprüche 1 bis 3, **dadurch gekennzeichnet, dass** für die Bildung der Aussparung(en) eine mechanische Bearbeitung durchgeführt wird.

5. Verfahren nach einem der Ansprüche 1 bis 3, **dadurch gekennzeichnet, dass** zur Bildung der Aussparung(en) eine Laserbearbeitung durchgeführt wird, insbesondere unter Bedingungen der Einstellung der Leistung des Lasers zwischen 1 und 3 Watt und der Geschwindigkeit der Verschiebung des Lasers zwischen 1 und 100 Millimeter pro Sekunde.

6. Verfahren nach einem der Ansprüche 1 bis 5, **dadurch gekennzeichnet, dass** bei jedem Schritt des Bearbeitens geblasen und die Rückstände angesaugt werden, insbesondere zur gleichen Zeit, in der die Bearbeitung durchgeführt wird.

7. Verfahren nach einem der Ansprüche 1 bis 6, **dadurch gekennzeichnet, dass** die CPC oder CPM in der oder den Aussparung(en) durch eine Verteilungsdüse angewendet wird.

8. Verfahren nach einem der Ansprüche 1 bis 7, **dadurch gekennzeichnet, dass** das Härten durch Laserbestrahlung jeder Schicht von MOS und das Härten durch Laserstrahlung der Schichten von CPC oder CPM, die in den Aussparungen platziert sind, unter den Bedingungen einer Einstellung der Leistung des Lasers zwischen 70 und 700 Milliwatt und einer Geschwindigkeit der Verschiebung des Lasers zwischen 1000 und 6000 Millimeter pro Sekunde durchgeführt wird.

9. Verfahren nach einem der Ansprüche 1 bis 8, **dadurch gekennzeichnet, dass** die Entbinderung bei einer Temperatur von 50 bis 800°C, insbesondere von 100 bis 700°C durchgeführt wird.

10. Maschine zur Herstellung mindestens eines Rohlings aus mindestens einem Werkstoff, ausgewählt aus den Keramikwerkstoffen und den Metallwerkstoffen durch das Verfahren, dass die Technik der additiven Fertigung verwendet, wie in einem der Ansprüche 1 bis 9 definiert, **dadurch gekennzeichnet, dass** sie Folgendes umfasst:
- einen Rahmen (4), der eine Konstruktionsplattform (3) einschließt, umfassend eine Arbeitsfläche;
- Bestrahlungsmittel gegenüber der Arbeitsplatte;
- Mittel zum Zuführen und Ausbreiten auf der Konstruktionsplattform (3) eines phothärtbaren organischen Opferwerkstoffs (MOS);
- Bearbeitungsmittel, die ausgelegt sind, um mindestens eine Aussparung (12) in einer photogehärteten Schicht von MOS (11) ausgehend vom oberen Teil derselben zu bilden;
- Mittel zum Blasen und Ansaugen der Rückstände, die sich von der Bearbeitung ergeben;
- Mittel zum Füllen des oder der Aussparungen (12), die in jeder photogehärteten Schicht von MOS (11) gebildet sind, um die so ausgesparte Schicht durch eine photohärtbare Keramik- oder Metallzusammensetzung (CPC oder CPM) zu vervollständigen, die ausgelegt ist, um abzufließen,
- Bestrahlungsmittel (10), die sich über der Konstruktionsplattform (3) befinden und ausgelegt sind, um jede Schicht von MOS zu bestrahlen, um sie härten zu lassen, nachdem sie ausgebreitet wurde, und die CPC oder die CPM zu bestrahlen, um sie härten zu lassen, nachdem sie in die Aussparungen (12) platziert wurde, die in den aufeinander folgenden gehärteten Schichten von MOS (11) angebracht sind.

11. Maschine nach Anspruch 10, die ausgelegt ist, um in Schichten einen MOS in Form einer Paste anzuwenden, **dadurch gekennzeichnet, dass** sie ein Gestell (5) umfasst, das mit mindestens einer Schableiste (6) ausgestattet und ausgelegt ist, um sich auf dem Rahmen (4) über der Arbeitsfläche derart zu verschieben, dass der freie Rand der Schableiste(n) (6) ausgelegt ist,
um die Schichten aus Paste von MOS auf der Arbeitsfläche zu verteilen, oder der MOS durch mindestens eine Verteilungsdüse (8) zugeführt wird, die vor mindestens einer Schableiste (6) verschiebbar ist, die den MOS bei seinem Durchgang durch dieselbe in eine gleichförmige Schicht ausbreitet

12. Maschine nach Anspruch 10, die ausgelegt ist, um in Schichten einen MOS in Form einer Suspension anzuwenden **dadurch gekennzeichnet, dass** sie eine von der Suspension zu füllende Wanne umfasst, wobei die Plattform aus Suspension ausgelegt ist, um sich Schritt für Schritt zu senken, um auf derselben bei jedem Schritt eine zu bestrahlende Schicht zu bilden, ebenso wie ein Rakel, um sicherzustellen, dass die Suspension auf der gesamten zu bestahlenden Oberfläche verteilt ist.

13. Maschine nach einem der Ansprüche 10 bis 12, **dadurch gekennzeichnet, dass** die Mittel zum Zuführen mindestens einer CPC oder CPM auf der Arbeitsfläche aus mindestens einer Verteilungsdüse (9) bestehen, die über einer entsprechenden Aussparung (12) verschoben werden kann, um die entsprechende Zusammensetzung in derselben anzuwenden.

14. Maschine (1) nach einem der Ansprüche 11 oder 13, **dadurch gekennzeichnet, dass** die oder mindestens eine der Düsen mit MOS oder CPC oder CPM durch einen flexiblen Schlauch versorgt wird, der mit einem Behälter verbunden ist, insbesondere einem Versorgungsbehälter mit Kolben.

15. Maschine nach einem der Ansprüche 11 oder 13, **dadurch gekennzeichnet, dass** die oder mindestens eine der Düsen (8, 9) mit MOS oder CPC oder CPM durch eine Patrone versorgt wird, von der sie den oberen Teil bildet, der eine Reserve von MOS oder CPC oder CPM enthält, und der ausgehend von einem Versorgungsbehälter aufladbar ist, der auf der Maschine montiert ist oder nicht, oder der, wenn er leer ist, durch eine volle Patrone ersetzt werden kann, wobei dieser Ersatz durch einen Roboterarm sichergestellt werden kann.

16. Maschine nach einem der Ansprüche 11 oder 13, **dadurch gekennzeichnet, dass** die oder mindestens eine der Düsen verschiebbar montiert ist
- mit Hilfe eines Roboterarms; oder
- auf einem Gestell, das gleichzeitig eine Gleitschiene umfasst, die ermöglicht, es entlang der horizontalen Achse x der Konstruktionsplattform zu verschieben, und eine Gleitschiene, die ermöglicht es entlang der horizontalen Achse y der Konstruktionsplattform zu verschieben; oder
- auf einem Gestell (5), das mit mindestens einer Schableiste (6) ausgestattet ist, um seine Verschiebung entlang der horizontalen Achse x des Vorschubs der Schableiste zu verschieben, wobei das Gestell (5) auch eine Gleitschiene (7) umfasst, die ermöglicht, es gemäß der horizontalen Achse y zu verschieben.

## Claims

1. A method for manufacturing at least one piece made of at least one material selected from the ceramic materials and the metallic materials using the technique of additive manufacturing, said one or more pieces being formed in the green state, and then subjected to debinding and sintering operations, said method comprising the following steps:
(1) building, by computer-aided design, a computer model of the piece to be manufactured or of the pieces to be simultaneously manufactured;
(2) forming, on a working tray, said one or more pieces to be manufactured, which are based on a ceramic or metallic photocurable composition (CPC or MPC) comprising:
- a mineral part consisting of at least one powdered ceramic material or at least one powdered metallic material; and
- an organic part able to be destroyed by heating during the debinding, and comprising at least one photocurable monomer and/or oligomer and at least one photoinitiator,
**characterized by** the fact that it comprises the following steps:
- selecting a CPC or MPC having the consistency of a suspension able to flow in order to form a layer;
- preparing a sacrificial organic material (SOM) able to form a photocurable layer and to be destroyed by heating during the debinding, said SOM comprising at least one photocurable monomer and/or oligomer and at least one photoinitiator;
- for the building of said one or more pieces, on the working tray, forming successive layers of SOM which are stacked on each other, each layer of SOM being caused to cure by irradiation before applying the next layer, the one or more properly speaking pieces based on CPC or MPC being built by:
- forming, by machining, at least one recess in at least one layer of cured SOM from the upper surface thereof;
- depositing, within said one or more recesses, the CPC or MPC in order to fill the one or more recesses;
- curing, by irradiation, the CPC or MPC located within said one or more recesses in order to obtain a hard horizontal surface having the same level as the adjacent layer of cured SOM,
wherein when forming each recess, the latter is delimited according to the one or more patterns previously defined from the computer model, and the depth(s) thereof selected in order to ensure the continuity of the piece(s) to be manufactured, and
obtaining, once the cured layers are stacked, one or more green pieces embedded in the SOM, such green pieces being subjected to a debinding by heating in order to destroy the SOM in which it is trapped or they are trapped, so as to release it or them and then submit it or them to a sintering.

2. The method according to claim 1, **characterized by** using a pasty SOM which is spread in a layer by scraping or a suspended SOM which is applied by dipping the tray in a bath of said suspension in order to form, each time, the layer of SOM to be cured, and scraping the layer thus formed.

3. The method according to one of claims 1 and 2, wherein the one or more pieces to be manufactured comprise at least one lateral part which should be supported during the building, **characterized in that** before the building, a computer model of the shape of the SOM in cured state was built, by computer-aided design, this shape being such that the one or more manufactured pieces are supported during their building.

4. The method according to one of claims 1-3, **characterized by** performing, in order to form the one or more recesses, mechanical machining.

5. The method according to one of claims 1-3, **characterized by** performing, in order to form the one or more recesses, laser machining, namely in conditions of setting the laser power between 1 and 3 watts and the laser displacement speed between 1 and 100 millimeters per second.

6. The method according to one of claims 1-5, characterized, at each machining step, by blowing and sucking the debris, particularly at the same time as said machining is conducted.

7. The method according to one of claims 1-6, **characterized by** applying the CPC or MPC within the one or more recesses by a dispensing nozzle.

8. The method according to one of claims 1-7, **characterized by** curing, by laser irradiation, of each layer of SOM and curing, by laser irradiation, of the layers of CPC or MPC located within the recesses under the conditions of setting the laser power between 70 and 700 milliwatts and a laser displacement speed between 1,000 and 6,000 millimeters per second.

9. The method according to one of claims 1-8, **characterized by** debinding at a temperature between 50 and 800°C, especially between 100 and 700°C.

10. A machine for manufacturing at least one piece made of at least one material selected from the ceramic materials and the metallic materials by the method using the technique of additive manufacturing such as defined in one of claims 1-9, **characterized in that** it comprises:
- a frame (4) surrounding a working tray (3) comprising a working surface;
- irradiating means facing the working surface;
- means for supplying and spreading into layers, on the working tray (3), a sacrificial photocurable organic material (SOM);
- machining means able to form at least one recess (12) in a layer of photocured SOM (11) from the upper part thereof;
- means for blowing and sucking the debris resulting from said machining;
- means for filling the one or more recesses (12) formed in each layer of photocured SOM (11) in order to complete the layer thus recessed by a ceramic or metallic photocurable composition (CPC or MPC) able to flow;
- irradiating means (10) arranged above the working tray (3) and able to irradiate, in order to cure it, each layer of SOM once spread, and irradiate, in order to cure it, the CPC or MPC once located within the recesses (12) made in the successive layers of cured SOM (11).

11. The machine according to claim 10, able to apply into layers a SOM under the form of a paste, **characterized in that** it comprises a gantry (5) having at least one scraping blade (6) and being able to move on the frame (4) above the working surface such that the free edge of the one or more scraping blades (6) is able to spread the layers of SOM paste on the working surface, or
wherein the SOM is supplied by at least one dispensing nozzle (8) movable in front of at least one scraping blade (6) which spreads the SOM into an uniform layer when passing thereon.

12. The machine according to claim 10, able to apply into layers a SOM under the form of a suspension, **characterized in that** it comprises a tank to be filled with said suspension, in which the working tray is able to be lowered step by step in order to form thereon, at each step, a layer to be irradiated, as well as a recoater in order to ensure that the suspension is dispensed on the entire surface to be irradiated.

13. The machine according to one of claims 10-12, **characterized in that** the means for supplying at least one CPC or MPC on the working surface are constituted by at least one dispensing nozzle (9) movable above a corresponding recess (12) in order to apply the corresponding composition therein.

14. The machine according to one of claims 11 or 13, **characterized in that** the or at least one of the nozzles is supplied with SOM or CPC or MPC by a hose connected to a tank, in particular a piston supply tank.

15. The machine according to one of claims 11 or 13, **characterized in that** the or at least one of the nozzles (8, 9) is supplied with SOM or CPC or MPC by a cartridge which forms the upper part of it, which contains a stock of SOM or CPC or MPC and which is refillable from a supply tank that can be mounted on the machine, or which when empty is replaceable by a full cartridge, wherein this replacement can be ensured by a robotic arm.

16. The machine according to one of claims 11 or 13, **characterized in that** the or at least one of the nozzles is movably mounted
- using a robotic arm; or
- on a gantry which has both a slide allowing to move it along the horizontal axis x of the working tray and a slide allowing to move it along the horizontal axis y of the working tray; or
- on a gantry (5) having at least one scraping blade (6) in order to allow the displacement thereof along the horizontal axis x of the scraping blade, said gantry (5) also comprising a slide (7) allowing to move it along the horizontal axis y.
